# EUROPÄISCHE PATENTANMELDUNG

(11) **EP 4 852 448 A1**
(43) Veröffentlichungstag der Anmeldung: **09.12.2026**
(21) Anmeldenummer: 26178490.4
(22) Anmeldetag: 13.05.2026
(51) Int. Cl.: H04R 1/1025, H04B 5/79, H04R 25/00

(54) **VERFAHREN ZUM BETRIEB EINES INDUKTIVEN LADEGERÄTS**

(30) Priorität: 02.06.2025 DE 102025121382
(71) Anmelder: WS Audiology A/S, 3540 Lynge (DK)
(72) Erfinder: RATHNAYAKA MUDIYANSELAGE, Sooriya Bandara, 539775 Singapore (SG); LER, Gee Heng, 539775 Singapore (SG); YAP, Heng Goh, 539775 Singapore (SG); SIEW, Chee Kong, 539775 Singapore (SG)
(74) Vertreter: FDST Patentanwälte

(57) **Zusammenfassung**

Die Erfindung betrifft ein Verfahren (28) zum Betrieb eines induktiven Ladegeräts (16) zum Laden eines ersten und eines zweiten Hörgeräts (4, 6), mit einer ersten Übertragungsspule (22) und mit einer zweiten Übertragungsspule (24). Beide Übertragungsspulen (22, 24) werden bestromt. Während lediglich erster Zeitfenster (36) werden anhand von Zustandsdaten der ersten Übertragungsspule (22) erste Kommunikationsdaten (38) von dem ersten Hörgerät (4) bestimmt. Während lediglich zweiter Zeitfenster (42) werden anhand von Zustandsdaten der zweiten Übertragungsspule (24) zweite Kommunikationsdaten (46) von dem zweiten Hörgerät (6) bestimmt. Dabei sind die ersten und zweiten Zeitfenster (34, 42) zueinander disjunkt. Die Erfindung betrifft ferner ein induktives Ladegerät (16) sowie ein Hörgerätesystem (2).

## Beschreibung

Die Erfindung betrifft ein Verfahren zum Betrieb eines induktiven Ladegeräts zum Laden eines ersten und eines zweiten Hörgeräts sowie ein induktives Ladegerät zum Laden eines ersten und eines zweiten Hörgeräts. Das induktive Ladegerät weist eine erste Übertragungsspule und eine zweite Übertragungsspule auf. Ferner betrifft die Erfindung ein Hörgerätesystem mit einem induktiven Ladegerät sowie einem ersten als auch zweiten Hörgerät.

Personen, die unter einer Verminderung des Hörvermögens leiden, verwenden üblicherweise ein Hörhilfegerät, das ein Hörgerät ist. Hierbei wird meist mittels eines Mikrofons, also eines elektromechanischen Schallwandlers, ein Umgebungsschall in ein elektrisches (Audio-/Schall-)Signal gewandelt, sodass das elektrische Signal erfasst wird. Die erfassten elektrischen Signale werden mittels einer Verstärkerschaltung bearbeitet und mittels eines weiteren elektromechanischen Wandlers in Form eines Hörers in den Gehörgang der Person eingeleitet. Meist erfolgt zudem eine Bearbeitung der erfassten Schallsignale, wofür üblicherweise ein Signalprozessor der Verstärkerschaltung verwendet wird. Hierbei ist die Verstärkung auf einen etwaigen Hörverlust des Hörgeräteträgers abgestimmt. Der (Schall-)Wandler und die Verstärkerschaltung sind in einem Gehäuse angeordnet und auf diese Weise vor Umwelteinflüssen zumindest teilweise geschützt.

Zur Bestromung der einzelnen Komponenten des Hörhilfegeräts, wie der Verstärkerschaltung und des Schallwandlers, wird meist eine Batterie verwendet. Diese ist zum Beispiel als austauschbare Sekundärbatterie ausgestaltet, die aus dem Gehäuse entnommen und außerhalb des Gehäuses geladen werden kann. Infolgedessen ist es jedoch erforderlich, dass das Gehäuse eine Mindestgröße aufweist, damit eine manuelle Entnahme der Batterie ermöglicht ist. Bei einer weiteren Verringerung der Baugröße des Gehäuses ist eine derartige Entnahme nicht mehr möglich. In diesem Fall ist die Batterie fest verbaut und wird innerhalb des Gehäuses geladen. Damit hierbei möglichst wenige Öffnungen in dem Gehäuse vorhanden sind, durch die beispielsweise Fremdpartikel in das Gehäuse eintreten können, ist in zunehmendem Maße eine Ladeeinheit in dem Gehäuse vorgesehen, die eine Empfangsspule aufweist. Diese wird zum Laden der Batterie mittels eines externen Ladegeräts induktiv erregt, sodass ein kabelloses Laden der Batterie und somit des Hörhilfegeräts erfolgt.

Das Ladegerät weist üblicherweise einen Schwingkreis mit einer Übertragungsspule auf, der mit einer Spannungsquelle verbunden ist. Mittels dieser erfolgt bei Betrieb eine Erregung des Schwingkreises, sodass mittels der Übertragungsspule ein Wechselstrom geführt wird. Infolgedessen bildet sich ein zeitlich veränderliches Magnetfeld aus, das in der Empfangsspule einen Wechselstrom induziert, der zum Laden der Batterie verwendet wird. Damit die zwischen dem Ladegerät und dem Hörgerät übertragende Energiemenge möglichst groß ist, wobei ein Ladevorgang vergleichsweise kurz und Verluste möglichst geringe sind, soll die Frequenz des erstellten Magnetfelds gleich der Eigenfrequenz des Schwingkreises des Ladegeräts sowie gleich der Eigenfrequenz eines teilweise mittels der Empfangsspule gebildeten weiteren Schwingkreises der Ladeeinheit sein.

Um eine Effizienz beim Laden und eine Lebensdauer der Batterie zu erhöhen, ist es erforderlich, die zu dem Hörgerät übertragende Energiemenge in Abhängigkeit von dem aktuellen Zustand der Batterie anzupassen. Als aktueller Zustand wird dabei üblicherweise ein aktueller Ladezustand sowie die Temperatur verwendet. Um diese Daten zu dem Ladegerät zu übertragen, wird beispielsweise eine separate Kommunikationsvorrichtung verwendet, die zum Beispiel dem Bluetooth-Standard genügt. Dies führt jedoch zu erhöhten Herstellungskosten und einem vergrößerten benötigten Bauraum. Auch werden dabei weitere Bestandteile des Hörgeräts wird betrieben, was zu einer Interferenz führen kann. Eine Alternative sieht daher vor die mittels des Hörgeräts bereitgestellte Last zu modellieren. Hierbei werden die Eigenschaften des Schwingkreises des Hörgeräts in Abhängigkeit der zu übertragenden Daten kurzzeitig verändert, was zu Schwankungen in dem mittels der Übertragungsspule geführte elektrische Strom führt. Die Schwankungen korrespondieren dabei zu den zu übertragenden Daten. Somit sind im Wesentlichen keine zusätzlichen Bauteile erforderlich.

Meist werden derartige Hörgeräte von einer Person für beide Ohren benötigt. In diesem Fall soll üblicherweise zur Erhöhung des Komforts und Kostenreduzierung meist lediglich ein entsprechendes induktives Ladegerät verwendet werden. Dieses weist dann zwei Übertragungsspulen auf, von denen jeweils eine einem der Hörgeräte zugeordnet ist. Die beiden Übertragungsspulen werden dann gelichzeitig betrieben, wobei die die zu dem jeweiligen Hörgerät übertragene Energie auf dieses angepasst wird. Bei der der Kommunikation mittels Modellierung der Last ist es jedoch möglich, dass eines der Hörgeräte mit beiden Übertragungsspulen und/oder die Übertragungsspulen untereinander wechselwirken. Dies kann dazu führen, dass die von dem falschen Hörgerät übertragenen Daten zur Anpassung der übertragenen Energiemenge führen und/oder dass die übertragenen Daten nicht mehr korrekt ermittelt werden können. Zumindest ist eine zweifelsfreie/fehlerfreie Zuordnung zu den unterschiedlichen Hörgeräten und ein entsprechendes Anpassen der zu übertragenden Energiemenge nicht mehr möglich.

Zur Abwendung hiervon ist es beispielsweise bekannt, die beiden Übertragungsspulen vergleichsweise weit voneinander entfernt anzuordnen und/oder zwischen diesen eine Abschirmung vorzusehen. Dies führt jedoch zu einem größeren Bauraum und zusätzlichen Materialkosten. Auch kann auf diese Weise eine Wechselwirkung zwischen einem der Hörgeräte und beiden Übertragungsspulen nicht vollständig ausgeschlossen werden, sodass auch weiterhin eine fehlerhafte Kommunikation möglich ist.

Der Erfindung liegt die Aufgabe zugrunde, ein besonders geeignetes Verfahren zum Betrieb eines induktiven Ladegeräts eines Hörgeräts sowie ein besonders geeignetes induktives Ladegerät eines Hörgeräts als auch ein besonders geeignetes Hörgerätesystem anzugeben, wobei zweckmäßigerweise Herstellungskosten reduziert und eine fehlerfreie Kommunikation gewährleistet ist.

Hinsichtlich des Verfahrens wird diese Aufgabe durch die Merkmale des Anspruchs 1, hinsichtlich des induktiven Ladegeräts durch die Merkmale des Anspruchs 4 und hinsichtlich des Hörgerätesystem durch die Merkmale des Anspruchs 7 gelöst. Vorteilhafte Weiterbildungen und Ausgestaltungen sind Gegenstand der jeweiligen Unteransprüche.

Das Verfahren dient dem Betrieb eines induktiven Ladegeräts. Das induktive Ladegerät dient dabei dem Laden eines ersten und eines zweiten Hörgeräts und ist hierfür geeignet, sowie zweckmäßigerweise vorgesehen und eingerichtet. Dabei ist es insbesondere möglich, beide Hörgeräte gleichzeitig mittels des induktiven Ladegeräts zu laden. Jedoch ist es insbesondere möglich, lediglich eines der Hörgeräte mittels des induktiven Ladegeräts zu laden, beispielsweise da ein Laden des anderen Hörgeräts nicht erforderlich ist.

Das induktive Ladegerät, das im Weiteren auch lediglich als Ladegerät bezeichnet wird, ist dabei kein Bestandteil der Hörgeräte, sondern dient dem Laden der Hörgeräte. Zum Beispiel weist das Ladegerät eine Halterung für die Hörgeräte auf, mittels derer die Hörgeräte bei dem Ladevorgang zeitweise gehalten werden oder werden können. Vorzugsweise ist die Halterung mittels zweier Ladeschalen, wie einer Mulde oder Kuhle gebildet, in die die Hörgeräte eingelegt werden kann. Nach Abschluss des Ladevorgang ist es dabei möglich, die Hörgerät von dem Ladegerät zu beanstanden und diese insbesondere getrennt zu verwenden.

Beispielsweise sind die beiden Hörgeräte zueinander unterschiedlich, oder vorzugsweise zueinander ähnlich. Insbesondere sind die beiden Hörgeräte spiegelbildlich zueinander aufgebaut, sodass eines davon einem Ohr eines Nutzers und das andere dem anderen Ohr des Nutzers zugeordnet ist.

Beispielsweise ist sind die Hörgeräte jeweils ein Kopfhörer oder umfassen einen Kopfhörer, und das jeweilige Hörgerät ist zum Beispiel ein Headset oder ein Bestandteil eines gemeinsamen Headsets. Besonders bevorzugt jedoch sind die Hörgeräte jeweils Hörhilfegeräte. Das jeweilige Hörhilfegerät dient der Unterstützung einer unter einer Verminderung des Hörvermögens leidenden Person. Mit anderen Worten sind die Hörhilfegeräte medizinische Geräte, mittels derer beispielsweise ein partieller Hörverlust ausgeglichen wird. Das jeweilige Hörhilfegerät ist beispielsweise ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Alternativ ist das jeweilige Hörhilfegerät ein Hinter-dem-Ohr-Hörhilfegerät ("Behind-the-Ear"-Hörhilfegerät), das hinter einer Ohrmuschel getragen wird.

Jedes Hörgerät ist vorgesehen und eingerichtet, am menschlichen Körper getragen zu werden. Mit anderen Worten umfasst das jeweilige Hörgerät bevorzugt eine Haltevorrichtung, mittels deren eine Befestigung am menschlichen Körper möglich ist. Sofern es sich bei dem jeweiligen Hörgerät um ein Hörhilfegerät handelt, ist das jeweilige Hörgerät vorgesehen und eingerichtet, beispielsweise hinter dem Ohr oder innerhalb eines Gehörgangs angeordnet zu werden. Insbesondere ist das jeweilige Hörgerät kabellos und dafür vorgesehen und eingerichtet, zumindest teilweise in einen Gehörgang eingeführt zu werden.

Jedes oder eines der Hörgeräte umfasst zum Beispiel ein Mikrofon, das dem Erfassen von Schall dient. Insbesondere wird bei Betrieb mittels des jeweiligen Mikrofons ein Umgebungsschall erfasst, oder zumindest ein Teil hiervon. Bei dem Mikrofon handelt es sich insbesondere um einen elektromechanischen Schallwandler. Das Mikrofon weist beispielsweise lediglich eine einzige Mikrofoneinheit oder mehrere Mikrofoneinheiten auf, die miteinander wechselwirken. Jede der Mikrofoneinheiten weist zweckmäßigerweise eine Membran auf, die anhand von Schallwellen in Schwingungen versetzt wird, wobei die Schwingungen mittels eines entsprechenden Aufnahmegeräts, wie eines Magneten, der in einer Spule bewegt wird, in ein elektrisches Signal gewandelt wird. Somit ist es möglich, mittels der jeweiligen Mikrofoneinheit ein Audiosignal zu erfassen, das auf dem auf die Mikrofoneinheit auftreffendem Schall basiert. Die Mikrofoneinheiten sind insbesondere omnidirektional ausgestaltet. Das Mikrofon ist zweckmäßigerweise zumindest teilweise innerhalb eines Gehäuses des Hörgeräts angeordnet und somit zumindest teilweise geschützt.

Zweckmäßigerweise weist eines oder beide Hörgeräte einen Hörer zum Ausgeben eines Ausgabesignals auf. Das Ausgabesignal ist hierbei insbesondere ein elektrisches Signal. Der Hörer ist ein elektromechanischer Schallwandler, vorzugsweise ein Lautsprecher. Je nach Ausgestaltung des jeweiligen Hörgeräts ist im bestimmungsgemäßen Zustand der Hörer zumindest teilweise innerhalb eines Gehörgangs eines Trägers des Hörgeräts, also des Nutzers, angeordnet oder zumindest akustisch mit diesem verbunden. Das entsprechende Hörgerät dient insbesondere hauptsächlich dem Ausgeben des Ausgabesignals mittels des jeweiligen Hörers, wobei ein entsprechender Schall erstellt wird. Mit anderen Worten ist die Hauptfunktion des jeweiligen Hörgeräts bevorzugt das Ausgeben des Ausgabesignals. Das Ausgabesignal ist dabei insbesondere zumindest teilweise in Abhängigkeit des mittels des zugeordneten Mikrofons erfassten Schalls erstellt.

Eines oder jedes der Hörgeräte umfasst zweckmäßigerweise einen Signalprozessor, der geeigneterweise eine Signalverarbeitungseinheit bildet oder zumindest ein Bestandteil hiervon ist. Zumindest jedoch umfasst das entsprechende Hörgerät zweckmäßigerweise eine entsprechende Signalverarbeitungseinheit. Der Signalprozessor ist beispielsweise ein digitaler Signalprozessor (DSP) oder mittels analoger Komponenten realisiert. Mittels des Signalprozessors erfolgt insbesondere eine Anpassung des mittels des etwaigen Mikrofons erstellten (Audio-)Signals, vorzugsweise in Abhängigkeit eines etwaigen Hörverlust des Trägers des Hörgeräts. Zweckmäßigerweise ist zwischen dem Mikrofon und der Signalverarbeitungseinheit, beispielsweise dem Signalprozessor, ein A/D-Wandler angeordnet, sofern der Signalprozessor als digitaler Signalprozessor ausgestaltet ist. Der Signalprozessor ist insbesondere in Abhängigkeit eines Parametersatzes eingestellt. Mittels des Parametersatzes wird dabei eine Verstärkung in unterschiedlichen Frequenzbereichen vorgegeben, sodass das mittels des Mikrofons erstellte Signal entsprechend bestimmter Vorgaben bearbeitet wird, insbesondere in Abhängigkeit eines Hörverlust des Trägers des Hörgeräts. Besonders bevorzugt umfasst eines oder jedes der Hörgeräte zusätzlich einen Verstärker, oder der Verstärker ist mittels des Signalprozessors zumindest teilweise gebildet. Beispielsweise ist der Verstärker signaltechnisch dem Signalprozessor vor- oder nachgeschaltet.

Die Hörgeräte umfasst vorzugsweise jeweils eine Ladeeinheit, die insbesondere zum kabellosen Laden des jeweiligen Hörgeräts, zweckmäßigerweise einer Batterie des jeweiligen Hörgeräts, vorgesehen ist. Hierfür ist die entsprechende Ladeeinheit im Montagezustand zweckmäßigerweise mit der zugeordneten Batterie elektrisch kontaktiert. Vorzugsweise handelt sich bei der jeweiligen Batterie um eine Sekundärbatterie, und/oder die Batterie dient dem Bestromen des etwaigen Hörers, Mikrofons und/oder der Signalverarbeitungseinheit. Insbesondere wird die Batterie im Wesentlichen zum Bestromen sämtlicher weiterer Bestandteile des jeweiligen Hörgeräts verwendet. Die Ladeeinheit dient insbesondere dem kabellosen Empfang von elektrischer Energie, sodass mittels der Ladeeinheit ein kabelloses Laden des Hörgeräts möglich ist, insbesondere ein sogenanntes "Wireless Charging". Zum Empfangen der elektrischen Energie umfasst jede Ladeeinheit zweckmäßigerweise eine entsprechende Empfangsspule.

Das Ladegerät weist eine erste Übertragungsspule und eine zweite Übertragungsspule auf. Diese sind jeweils elektrische Spulen beispielsweise Bestandteil eines jeweiligen Schwingkreises. Insbesondere ist jede Übertragungsspule mittels eines gewickelten Lackdrahts, wie Kupferlackdraht, gebildet. Beispielsweise sind die beiden Übertragungsspulen zueinander unterschiedlich oder besonders bevorzugt zueinander baugleich. Die beiden Übertragungsspule sind somit geeignet, sowie zweckmäßigerweise vorgesehen und eingerichtet, bei Bestromung ein Magnetfeld zu erstellen, mittels dessen dann die beiden Hörgeräte geladen werden. Dabei ist insbesondere in die erste Übertragungsspule dem ersten Hörgerät und die zweite Übertragungsspule dem zweiten Hörgerät zugeordnet. Geeigneterweise ist dabei das erste Hörgerät, dasjenige der Hörgeräte, das sich am nächsten an der ersten Übertragungsspule befindet, und das zweite Hörgerät, dasjenige Hörgerät, das sich am nächsten an der ersten Übertragungsspule befindet. Alternativ hierzu besteht eine feste Zuordnung der Hörgeräte zu den Übertragungsspulen.

Das Ladegerät weist vorzugsweise eine Spannungsquelle auf, mittels derer eine (elektrische) Spannung, wie beispielsweise eine Gleichspannung oder besonders bevorzugt eine (elektrische) Wechselspannung bereitgestellt wird. Insbesondere ist die elektrische Spannung unter 60 V und beträgt beispielsweise 12 V oder 5 V. Beispiel mittels der Spannungsquelle sind dabei zweckmäßigerweise die Übertragungsspulen bestromt. Vorzugsweise sind hierbei zwei entsprechende Spannungsquellen vorhanden, wobei jedem der Schwingkreis und somit jeder der Übertragungsspulen jeweils eine der Spannungsquellen zugeordnet ist. Somit ist ein unabhängiger Betrieb der beiden Übertragungsspulen ermöglicht oder zumindest vereinfacht. Zusammenfassend ist es bevorzugt möglich, mittels der Spannungsquellen den jeweiligen Schwingkreis zu betreiben, wofür insbesondere ein elektrischer Strom von der jeweiligen Spannungsquelle in den zugeordneten Schwingkreis geleitet wird. Vorzugsweise ist jedem Schwingkreis hierbei eine Kapazität zugeordnet.

Geeigneterweise sind die Kapazität und die jeweilige Übertragungsspule aufeinander abgestimmt, sodass sich eine Resonanzfrequenz ergibt, die zu einer Resonanzfrequenz eines dem jeweiligen Hörgerät zugeordneten Schwingkreises angepasst ist, die die zugeordnete etwaige Empfangsspule aufweist. Vorzugsweise ist das erste/zweite Hörgerät auf die erste/zweite Übertragungsspule und den damit gebildeten etwaigen Schwingkreis fest eingestellt, oder es erfolgt eine dynamische Anpassung der Resonanzfrequenz, beispielsweise bei dem Ladegerät und/oder der jeweiligen etwaigen Ladeeinheit. Somit ist stets eine vergleichsweise effiziente Energieübertragung ermöglicht.

Bei dem Verfahren werden beide Übertragungsspulen bestromt. Zum Bestromen wird an die jeweilige Übertragungsspule vorzugsweise eine entsprechende elektrische Spannung angelegt. Hierfür wird insbesondere die entsprechende etwaige Spannungsquelle verwendet, wobei insbesondere der zugeordnete Schwingkreis angeregt wird. Geeigneterweise wird dabei mittels beider Übertragungsspulen jeweils ein zeitlich veränderliches Magnetfeld erstellt. Beide Übertragungsspulen werden zweckmäßigerweise gleichzeitig bestromt, sodass das der jeweiligen Übertragungsspule zugeordnet Hörgerät von dem jeweils erstellten Magnetfeld durchgesetzt wird. Folglich werden beiden Hörgeräte, sofern diese vorhanden sind, gleichzeitig geladen.

Während lediglich erster Zeitfenster werden anhand von Zustandsdaten der ersten Übertragungsspule erste Kommunikationsdaten von dem ersten Hörgerät bestimmt. Mit anderen Worten sind mehrere erste Zeitfenster vorhanden, die zeitlich nachfolgend auftreten. Hierbei sind die ersten Zeitfenster vorzugsweise nicht überlappend, und zwischen diesem befindet sich vorzugsweise eine zusätzliche Zeitspanne, sodass die ersten Zeitfenster nicht direkt aneinander angrenzen. Zweckmäßigerweise sind die ersten Zeitfenster gleich lang. Lediglich dann, wenn eines der ersten Zeitfenster vorherrscht, werden anhand der Zustandsdaten der ersten Übertragungsspule die ersten Kommunikationsdaten bestimmt. Mit anderen Worten werden die Zustandsdaten der ersten Übertragungsspule vorzugsweise erfasst, und anhand dieser die ersten Kommunikationsdaten bestimmt. Insbesondere werden dabei die Zustandsdaten ausgewertet/decodiert. Als Zustandsdaten wird insbesondere ein mittels der ersten Übertragungsspule geführte elektrische Strom und/oder die daran anliegende elektrische Spannung herangezogen. Diese werden somit ausgewertet und daraus die ersten Kommunikationsdaten erstellt.

Die ersten Kommunikationsdaten sind dem ersten Hörgerät zugeordnet. Mit anderen Worten wird angenommen, dass die ersten Kommunikationsdaten mittels des ersten Hörgeräts erstellt oder zumindest mittels dessen hervorgerufen wurden. Zumindest wird angenommen, dass die ersten Kommunikationsdaten zu einer Kommunikation korrespondieren, die von dem ersten Hörgerät zumindest teilweise initiiert ist. Geeigneterweise wird hierfür mittels des ersten Hörgeräts eine Lastmodulation durchgeführt, sodass sich Schwankungen in dem mittels der ersten Übertragungsspule geführten elektrischen Stroms ergeben. Diese korrespondierend zu den ersten Kommunikationsdaten, die mittels des induktiven Ladegeräts bestimmt werden. Beispielsweise werden auch außerhalb der ersten Zeitfenster die Zustandsdaten der ersten Übertragungsspule erfasst. Anhand dieser werden jedoch zum Beispiel jedoch nicht die erste Kommunikationsdaten bestimmt. Besonders bevorzugt jedoch werden außerhalb der ersten Zeitfenster die Zustandsdaten der ersten Übertragungsspule nicht erfasst, weswegen ein Aufwand verringert ist.

Ferner werden lediglich während zweiter Zeitfenster anhand von Zustandsdaten der zweite Übertragungsspule zweite Kommunikationsdaten von dem zweiten Hörgerät bestimmt. Hierbei sind ebenfalls mehrere entsprechende zweite Zeitfenster vorhanden, die vorzugsweise nacheinander auftreten, wobei die zweiten Zeitfenster zweckmäßigerweise zueinander zeitlich beabstandet sind. Geeigneterweise sind zweiten Zeitfenster jeweils gleich lang. Bevorzugt sind die ersten Zeitfenster und die zweiten Zeitfenster gleich lang, weswegen eine Umsetzung erleichtert ist. Vorzugsweise werden die gleichen Zustandsdaten der zweiten Übertragungsspule erfasst wie die Zustandsdaten der ersten Übertragungsspule, also insbesondere die an der zweiten Übertragungsspule anliegende elektrische Spannung und/oder der damit geführte elektrische Strom. Vorzugsweise wird in gleicher Art und Weise anhand der Zustandsdaten der zweiten Übertragungsspule die zweiten Kommunikationsdaten bestimmt, wie anhand der Zustandsdaten der ersten Übertragungsspule die ersten Kommunikationsdaten bestimmt werden. Im Unterschied hierzu sind jedoch die zweiten Kommunikationsdaten dem zweiten Hörgerät zu geordnet.

Die ersten und die zweite Zeitfenster sind zueinander disjunkt. Mit anderen Worten überlappen die ersten und zweiten Zeitfenster nicht. Geeigneterweise tritt dabei jeweils eines der ersten Zeitfenster abwechselnd mit einem der zweiten Zeitfenster auf, und diese Grenzen vorzugsweise aneinander an. Zusammenfassend folgt somit auf jedes erste Zeitfenster eines der zweiten Zeitfenster und umgekehrt.

Bei dem Verfahren erfolgt somit ein zeitlich versetztes Bestimmen der Kommunikationsdaten von dem ersten und zweiten Hörgerät. Falls somit bei der zweiten Übertragungsspulen aufgrund der Kommunikation des ersten Hörgeräts mit der ersten Übertragungsspule Interferenzen oder ungewünschte Wechselwirkungen auftreten, werden diese nicht für die Kommunikation beachtet. Zumindest werden keine zweiten Kommunikationsdaten erstellt, die missinterpretiert werden könnten. In gleicher Weise erfolgt dies auch bei der zweite Übertragungsspule und dem ersten Hörgerät. Daher erfolgt eine zweifelsfreie und fehlerfreie Zuordnung der Kommunikationsdaten der beiden Hörgeräte zu der jeweiligen Übertragungsspule. Mit anderen Worten ist eine fehlerfreie Kommunikation gewährleistet. Dabei sind keine zusätzlichen Bauteile erforderlich, weswegen Herstellungskosten nicht erhöht sind. Folglich ist es möglich, die Kommunikationsdaten von dem jeweiligen Hörgerät zu dem Ladegerät zu übertragen, ohne dass hierfür ein zusätzlicher Empfänger /Sender verwendet werden müsste, weswegen dies mit einem vergleichsweise geringen Energiebedarf durchgeführt werden kann. Auch besteht keine Wechselwirkung zwischen dem Empfänger/Sender und der Energieübertragung mittels der Übertragungsspulen.

Beispielsweise sind zusätzlich zu den ersten/zweiten Zeitfenster noch weitere Zeitfenster vorhanden, während derer im Wesentlichen gleichzeitig Zustandsdaten der beiden Übertragungsspulen erfasst und anhand dieser jeweils zugeordnete Kommunikationsdaten bestimmt werden. Besonders bevorzugt jedoch erfolgt dies nicht, und lediglich während der ersten und zweiten Zeitfenster werden die entsprechenden Kommunikationsdaten bestimmt. Somit ist stets eine fehlerfreie Kommunikation gewährleistet.

Die Kommunikationsdaten korrespondieren zweckmäßigerweise zu einem aktuellen Zustand des jeweiligen Hörgeräts. Somit ist auch in dem Ladegerät das Wissen um den aktuellen Zustand des jeweiligen Hörgeräts vorhanden. Zum Beispiel korrespondieren dabei die Kommunikationsdaten zu einer aktuellen Spannung der etwaigen dem jeweiligen Hörgerät zugeordneten Batterie und/oder einer aktuellen Temperatur des jeweiligen Hörgeräts.

Beispielsweise werden die Kommunikationsdaten kontinuierlich oder zumindest zu bestimmten festen Zeitpunkten von dem jeweiligen Hörgerät bereitgestellt oder zumindest eine entsprechende Lastmodulation durchgeführt. Besonders bevorzugt jedoch erfolgt dies lediglich dann, wenn eine entsprechende Aufforderung mittels des Ladegeräts erstellt wird. Hierfür wird insbesondere eine Bestromung der jeweiligen Übertragungsspule verändert. Dies erfolgt beispielsweise stets gleichzeitig. Besonders bevorzugt jedoch wird während der ersten Zeitfenster die Bestromung der ersten Übertragungsspule zur Übertragung von ersten Daten angepasst, und während der zweiten Zeitfenster wird die Bestromung der zweiten Übertragungsspule zur Übertragung von zweiten Daten angepasst. Die ersten Daten sind dabei insbesondere für das erste Hörgerät und die zweiten Daten für das zweite Hörgerät vorgesehen. Zum Übertragen der Daten wird geeigneterweise eine entsprechende Modulation der Bestromung jeweiligen Übertragungsspule durchgeführt. Alternativ oder in Kombination hierzu wird die an die jeweilige Übertragungsspule angelegte elektrische Spannung zum Beispiel entsprechend moduliert. Insbesondere korrespondieren hierbei die jeweiligen Daten zu einer Aufforderung an das jeweilige Hörgerät, die jeweiligen Kommunikationsdaten bereitzustellen und hierfür insbesondere entsprechende Lastmodulation durchzuführen. Mit anderen erfolgt hierbei zweckmäßigerweise eine Abfrage des aktuellen Zustands des jeweiligen Hörgeräts. Insbesondere erfolgt dabei das übertragende der jeweiligen Daten stets in gleicher Art und Weise und vorzugsweise mittels einer entsprechenden Aufmodulation auf den zur Bestromung der Übertragungsspulen verwendeten elektrischen Stroms und/oder der angelegten Spannung.

Bevorzugt wird lediglich während der ersten Zeitfenster die Bestromung der ersten Übertragungsspule und lediglich während der zweiten Zeitfenster die Bestromung der zweiten Übertragungsspule zur Übertragung der jeweiligen Daten angepasst. Somit erfolgt lediglich während der ersten Zeitfenster eine Kommunikation zwischen dem Ladegerät und dem ersten Hörgerät und lediglich während der zweiten Zeitfenster eine Kommunikation zwischen dem Ladegerät und dem zweiten Hörgerät, wobei dies jeweils bidirektional erfolgt. Da die Aufteilung der vollständigen Kommunikation auf die unterschiedlichen Zeitfenster erfolgt, ist diese vollständig fehlerfrei, und eine Überlastung ist verhindert.

Beispielsweise wird werden die jeweilige Kommunikationsdaten mittels des Ladegeräts lediglich protokolliert. Besonders bevorzugt jedoch wird in Abhängigkeit der ersten Kommunikationsdaten die Bestromung der ersten Übertragungsspule und in Abhängigkeit der zweiten Kommunikationsdaten die Bestromung der zweiten Übertragungsspule angepasst. Hierbei wird insbesondere die zu dem jeweiligen Hörgerät übertragende Energie, zum Beispiel die Energiemenge und/oder Parameter angepasst, die zu der Amplitude der in der etwaige Empfangsspule induzierten elektrischen Spannung korrespondieren. Vorzugsweise erfolgt dabei eine Anpassung an die aktuelle Betriebsweise der etwaigen Ladeeinheit des jeweiligen Hörgeräts. Auf diese Weise ist es möglich, die jeweilige Batterie vergleichsweise schonend und in einer vergesse kurzen Zeitspanne zu laden. Dabei ist aufgrund der eindeutigen Zuordnung der Kommunikation zu dem jeweiligen Hörgerät stets sichergestellt, dass die Anpassung auf das richtige Hörgerät erfolgt.

Das induktive Ladegerät ist zum Laden eines ersten und eines zweiten Hörgeräts geeignet, insbesondere vorgesehen und eingerichtet. Das induktive Ladegerät weist. Das induktive Ladegerät ist dabei zweckmäßigerweise auch zum gleichzeitigen Laden der beiden Hörgeräte geeignet, sowie vorgesehen und eingerichtet. Vorzugsweise erfolgt das Laden dabei mittels Magnetresonanz. Das induktive Ladegerät weist eine erste Übertragungsspule und eine zweite Übertragungsspule auf. Dabei ist die erste Übertragungsspule insbesondere dem ersten Hörgerät und die zweite Übertragungsspule dem zweiten Hörgerät zugeordnet. Vorzugsweise umfasst das induktive Ladegerät eine oder mehrere Spannungsquellen, mittels derer die jeweilige Übertragungsspule bestromt werden kann. Insbesondere ist mittels jeder der Übertragungsspulen zumindest teilweise ein jeweiliger Schwingkreis gebildet.

Das induktive Ladegerät ist gemäß einem Verfahren betrieben, bei dem beide Übertragungsspulen bestromt werden. Während lediglich erster Zeitfenster werden anhand von Zustandsdaten der ersten Übertragungsspule erste Kommunikationsdaten von dem ersten Hörgerät bestimmt. Während lediglich zweiter Zeitfenster werden anhand von Zustandsdaten der zweiten Übertragungsspule zweite Kommunikationsdaten von dem zweiten Hörgerät bestimmt. Die ersten und zweiten Zeitfenster sind zueinander disjunkt.

Insbesondere weist das Ladegerät ein Steuergerät auf, mittels dessen das Verfahren zumindest teilweise durchgeführt wird. Mit anderen Worten ist das Steuergerät geeignet, insbesondere vorgesehen und eingerichtet, das Verfahren durchzuführen. Das Steuergerät ist hierbei beispielsweise mittels diskreter Bauteile erstellt, oder das Steuergerät weist beispielsweise einen Mikrocontroller auf, der zweckmäßigerweise programmierbar ausgestaltet ist.

Beispielsweise weist das Ladegerät eine im Wesentlichen ebene Fläche auf, auf der die beiden Hörgeräte zum Laden abgelegt werden können. Besonders bevorzugt jedoch umfasst das Ladegerät eine Halterung, mittels derer die beiden Hörgeräte verliersicher gehalten werden können. Geeigneterweise umfasst das Ladegerät, insbesondere die Halterung, eine erste Ladeschale und eine zweite Ladeschale. Dabei ist erste Ladeschale für das erste Hörgerät und die zweite Ladeschale für das zweite Hörgerät vorgesehen. Die beiden Ladeschale sind dabei geeigneterweise voneinander getrennt, und grenzen beispielsweise direkt aneinander an. Alternativ hierzu sind die beiden Ladeschalen zueinander beabstandet. Insbesondere sind die beiden Ladeschale an das jeweilige Hörgerät angepasst, und beispielsweise zueinander spiegelbildlich aufgebaut. Vorzugsweise ist, wenn das jeweilige Hörgerät in die zugeordneten Ladeschale eingelegt ist, zumindest teilweise ein Formschluss zwischen diesen gebildet. Somit ist einerseits das Anordnen in der jeweiligen Ladeschale erleichtert. Andererseits ist die Position des jeweiligen Hörgeräts und der etwaigen Empfangsspule bezüglich der jeweils zugeordneten Übertragungsspule fest vorgegeben, was eine Effizienz erleichtert. Auch ist auf diese Weise für einen Nutzer ersichtlich, in welchen der beiden Ladeschale welches der Hörgeräte eingelegt werden soll, weswegen ein Komfort erhöht ist.

Beispielsweise sind die beiden Übertragungsspulen zueinander beabstandet, und zwischen diesen ist vorzugsweise eine Abschirmung angeordnet. Somit ist die ungewünschte Wechselwirkung zwischen der ersten Übertragungsspule und dem zweiten Hörgerät sowie zwischen der zweiten Übertragungsspule und dem ersten Hörgerät verringert. Besonders bevorzugt jedoch sind die beiden Übertragungsspulen direkt benachbart zueinander angeordnet. Zum Beispiel berühren sich diese. Zweckmäßigerweise sind dabei die beiden Übertragungsspulen zueinander elektrisch isoliert. Aufgrund einer derartigen Anordnung sind ein Platzbedarf und ein Materialbedarf verringert.

Das Hörgerätesystem weist ein erstes Hörgerät sowie ein zweites Hörgerät als auch ein induktives Ladegerät auf. Das erste und/oder zweite Hörgerät ist beispielsweise ein Headset oder ein Kopfhörer. Besonders bevorzugt sind die Hörgeräte jeweils als ein Hörhilfegerät ausgebildet und dienen der Unterstützung einer unter einem zumindest teilweisen Hörverlust leidenden Person. Alternativ hierzu dient zumindest eines der Hörgeräte oder beide Hörgeräte insbesondere als sogenannter Tinnitusmasker, also insbesondere der Behandlung eines Tinnitus. Zum Beispiel ist das jeweilige Hörhilfegerät ein "Receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Alternativ ist das jeweilige Hörhilfegerät ein Hinterdem-Ohr-Hörhilfegerät ("Behind-the-Ear"-Hörhilfegerät), das hinter einer Ohrmuschel getragen wird.

Jedes Hörgerät weist vorzugsweise eine jeweilige Batterie auf, mittels derer bei Betrieb insbesondere eine Bestromung von weiteren Bauteilen des jeweiligen Hörgeräts erfolgt. Vorzugsweise ist die jeweilige Batterie eine Sekundärbatterie und geeigneterweise fest, also insbesondere unlösbar, in einem Gehäuse des entsprechenden Hörgeräts verbaut. Zudem weist das jeweilige Hörgerät geeigneterweise jeweils eine Ladeeinheit auf, die dem Laden des Hörgeräts, insbesondere der Batterie, dient. Hierfür ist die Ladeeinheit geeignet, insbesondere vorgesehen und eingerichtet. Die Ladeeinheit ist insbesondere zum kabellosen Laden geeignet, zweckmäßigerweise vorgesehen und eingerichtet. Die Ladeeinheit ist geeigneterweise innerhalb des Gehäuses des jeweiligen Hörgeräts angeordnet. Die Ladeeinheit weist vorzugsweise eine Empfangsspule auf und ist beispielsweise elektrisch mit der Batterie kontaktiert, vorzugsweise direkt. Zweckmäßigerweise ist es dabei möglich, mittels der jeweiligen Ladeeinheit eine sogenannte Lastmodulation durchzuführen, und die entsprechende Ladeeinheit ist hierfür geeignet, zweckmäßigerweise vorgesehen und eingerichtet.

Das Ladegerät weist eine erste Übertragungsspule und eine zweite Übertragungsspule. Vorzugsweise ist mittels dieser jeweils ein Schwingkreis gebildet. Insbesondere umfasst das Ladegerät eine Spannungsquelle, mittels derer die Schwingkreise bestromt werden können. Das Ladegerät ist gemäß einem Verfahren betrieben, bei dem beide Übertragungsspulen bestromt werden. Während lediglich erster Zeitfenster werden anhand von Zustandsdaten der ersten Übertragungsspule erste Kommunikationsdaten von dem ersten Hörgerät bestimmt. Während lediglich zweiter Zeitfenster werden anhand von Zustandsdaten der zweiten Übertragungsspule zweite Kommunikationsdaten von dem zweiten Hörgerät bestimmt. Die ersten und zweiten Zeitfenster sind zueinander disjunkt und überlappen somit nicht.

Insbesondere ist es möglich, das induktive Ladegerät und die Hörgeräte induktiv zu koppeln. Beispielsweise weist das Ladegerät eine Halterung zur zumindest temporären Befestigung der Hörgeräte auf, vorzugsweise während eines Ladevorgangs.

Die im Zusammenhang mit dem Verfahren erläuterten Weiterbildungen und Vorteile sind sinngemäß auch auf das induktive Ladegerät / das Hörgerätesystem und unter untereinander zu übertragen und umgekehrt.

Nachfolgend wird ein Ausführungsbeispiel der Erfindung anhand einer Zeichnung näher erläutert. Darin zeigen:
- Fig. 1: schematisch vereinfacht ein Hörgerätesystem mit zwei Hörgeräten und einem Schaltplan eines Systems mit einem Hörgerät und einem induktiven Ladegerät,
- Fig. 2: ein Verfahren zum Betrieb des induktiven Ladegeräts, und

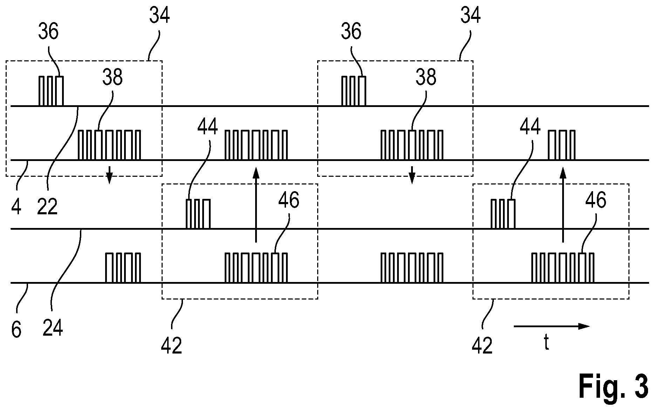

- Fig. 3: den zeitlichen Verlauf von Daten und Kommunikationsdaten.

Einander entsprechende Teile sind in allen Figuren mit den gleichen Bezugszeichen versehen.

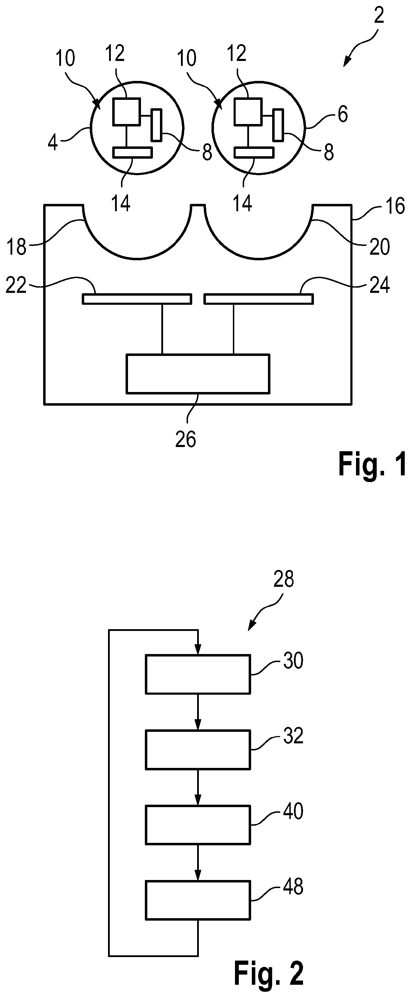

In Figur 1 ist schematisch vereinfacht in einer Schnittdarstellung ein Hörgerätesystem 2 dargestellt. Das Hörgerätesystem 2 weist ein erstes Hörgerät 4 und ein zweites Hörgerät 6 auf. Diese sind spiegelbildlich zueinander aufgebaut, aber ansonsten identisch. Die beiden Hörgeräte 4, 6 sind als Hörhilfegeräte ausgebildet und dienen der Unterstützung einer unter einem Hörverlust leidenden Nutzer. Hierfür weisen die Hörgeräte 4, 6 jeweils ein nicht näher dargestelltes Mikrofon und einen Hörer auf, zwischen denen signaltechnisch eine Signalverarbeitungseinheit angeordnet ist. Mittels dieser werden die mittels des Mikrofons erfassten Signale bearbeitet und auf einen Hörverlust des Nutzers des Hörgerätesystems 2 angepasst. Diese werden dann mittels des Hörers ausgegeben.

Zur Bestromung der einzelnen Bestandteile des jeweiligen Hörgeräts 4, 6 ist eine Batterie 8 vorgesehen, die fest innerhalb eines Gehäuses des jeweiligen Hörgeräts 4, 6 verbaut ist. Zum Laden der Batterie 8 ist eine Ladeeinheit 10 des jeweiligen Hörgeräts 4, 6 vorgesehen, die eine Ladeelektronik 12 und eine damit betriebenen Empfangsspule 14 aufweist. Das Laden der beiden Hörgeräte 4, 6 erfolgt dabei, wenn die beiden Empfangsspulen 14 mittels eines zeitlich veränderlichen Magnetfelds durchsetzt sind, so dass darin ein elektrischer Strom induziert wird. Dieser wird über die Ladeelektronik 12 in die jeweilige Batterie 8 eingespeist, wobei die Höhe des elektrischen Stroms und/oder die elektrische Spannung an den aktuellen Zustand des jeweiligen Hörgeräts 4, 6 angepasst wird, nämlich die Temperatur sowie den Ladezustand der Batterie 8.

Das Hörgerätesystem 2 umfasst ferner ein induktives Ladegerät 16, das eine erste Ladeschale 18 und eine zweite Ladeschale 20 aufweist. Die erste Ladeschale 18 ist dabei dem ersten Hörgerät 4 und die zweite Ladeschale 20 dem zweiten Hörgerät 6 zugeordnet. Dabei kann das erste Hörgerät 4 in die erste Ladeschale 18 und das zweite Hörgerät 6 in die zweite Ladeschale 20 eingesetzt werden, sodass zumindest teilweise ein Formschluss realisiert wird. Aufgrund der spiegelbildlichen Ausgestaltung der beiden Hörgeräte 4, 6 ist dies umgekehrt nicht möglich.

Unterhalb der ersten Ladeschale 18 ist eine erste Übertragungsspule 22 angeordnet, die somit dem ersten Hörgerät 4 zugeordnet ist. Unterhalb der zweiten Ladeschale 20 ist eine zweite Übertragungsspule 24 angeordnet, die dem zweiten Hörgerät 6 zugeordnet ist. Dabei ist die erste Übertragungsspule 22 direkt benachbart zu der zweiten Übertragungsspule 24 und einer gemeinsamen Ebene angeordnet. Mit anderen Worten ist zwischen den Übertragungsspulen 22, 24 lediglich ein geringer Abstand und keine Abschirmung vorhanden.

Die beiden Übertragungsspulen 22, 24 sind mittels eines Steuergeräts 26 betrieben, mittels dessen an die Übertragungsspule 22, 24 jeweils eine bestimmte elektrische Spannung angelegt werden kann, sodass diese bestromt werden. Hierbei ist jeder Übertragungsspule 22, 24 eine nicht näher dargestellte Kapazität zugeordnet, sodass ein Schwingkreis gebildet ist. Die Resonanzfrequenz dieser Schwingkreise ist auf einen Schwingkreis des jeweils zugeordneten Hörgeräts 4, 6 angepasst, der die jeweiligen Empfangsspule 14 umfasst. Somit ist es möglich, mittels des induktiven Ladegeräts 16 die beiden Hörgeräte 4, 6 induktiv mittels Magnetresonanz zu laden.

Mittels des Steuergeräts 26 wird ein in Figur 2 dargestelltes Verfahren 28 durchgeführt. Somit ist das Steuergerät 26 geeignet sowie vorgesehen und eingerichtet, zumindest teilweise das Verfahren 28 durchzuführen, und das induktive Ladegerät 16, das auch lediglich als Ladegerät 16 bezeichnet ist, ist gemäß dem Verfahren 28 betrieben.

In einem ersten Arbeitsschritt 30 werden des Steuergeräts 26 die beiden Übertragungsspulen 22, 24 bestromt. Hierfür wird eine entsprechende elektrische Spannung an diese angelegt. Dies erfolgt insbesondere, sobald erfasst wurde, dass die Hörgeräte 4, 6 in der jeweiligen Ladeschale 18, 20 einliegen. Hierbei erfolgt die Bestromung derart, dass mittels der Übertragungsspulen 22, 24 ein elektrisch veränderliches Magnetfeld erstellt wird, sodass in den Empfangsspulen 14 sich jeweils ein elektrischer Strom ergibt, der zum Betrieb der Ladeelektronik 12 verwendet wird, und der mittels der der Ladeelektronik 12 in die jeweilige Batterie 8 eingespeist wird.

In einem zweiten Arbeitsschritt 32, der stets dann durchgeführt wird, wenn ein erstes Zeitfenster 34 vorliegt, wird die Bestromung der ersten Übertragungsspule 22 zur Übertragung von ersten Daten 36 angepasst. Die erste Daten 36 korrespondiert zu einer Aufforderung an das erste Hörgerät 4, den aktuellen Zustand des ersten Hörgeräts 4 zu übertragen. Die ersten Daten 36 werden dabei in den zur Bestromung der ersten Übertragungsspule 22 verwendeten Strom moduliert. Die Bestromung der zweiten Übertragungsspule 24 hingegen wird nicht verändert. Die veränderte Bestromung der ersten Übertragungsspule 22 wird mittels des erste Hörgeräts 4, nämlich der Ladeelektronik 12, anhand der veränderten übertragenen Energiemenge erkannt und entsprechend ausgewertet. Infolgedessen werden mittels des ersten Hörgeräts 4 erste Kommunikationsdaten 38 bereitgestellt, die zu der aktuellen Temperatur und dem aktuellen Ladezustand der Batterie des ersten Hörgeräts 4 korrespondieren. Diese werden mittels Lastmodulation von dem ersten Hörgerät 4 zu dem induktiven Ladegerät 16 übertragen. Hierfür wird beispielsweise mittels der Ladeelektronik 12 die Resonanzfrequenz des die Empfangsspule 14 aufweisen Schwingkreises in Abhängigkeit der ersten Kommunikationsdaten 38 verändert. Infolgedessen ändert sich der Zustand der ersten Übertragungsspule 22, sodass sich veränderte Zustandsdaten der ersten Übertragungsspule ergeben, die mittels des Steuergeräts 26 erfasst und anhand derer dann die ersten Kommunikationsdaten 36 bestimmt werden. Hierbei ist es möglich, dass sich aufgrund der Lastmodulation Rückwirkungen bei der zweiten Übertragungsspule 24 oder dem zweiten Hörgerät 6 ergeben. Während des ersten Zeitfenster 34 werden diese jedoch nicht weiter berücksichtigt.

Nach Ablauf des ersten Zeitfensters 34 wird ein dritter Arbeitsschritt 40 durchgeführt. Der dritte Arbeitsschritt 40 wird dabei stets während eines zweiten Zeitfensters 42 durchgeführt. Die zweite Zeitfenster 42 sind dabei gleich lang wie die ersten Zeitfenster 34 und wechseln sich direkt mit diesen ab. Während des zweiten Zeitfensters 42 wird die Bestromung der zweite Übertragungsspule 24 zur Übertragung von zweite Daten 44 angepasst. Diese korrespondieren zu einer Aufforderung an das zweite Hörgerät 6, den aktuellen Zustand zu dem induktiven Ladegerät 16 zu übertragen.

Mittels des Ladeeinheit 10 des zweiten Hörgeräts 6 wird dann eine Lastmodulation durchgeführt und die zugeordnete Empfangsspule 14 entsprechend betrieben, sodass zweite Kommunikationsdaten 44 übertragen werden. Aufgrund des veränderten Lastverhaltens ergeben sich veränderte Zustandsdaten der zweiten Übertragungsspule 24, die mittels des Steuergeräts 26 erfasst werden. Anhand dieser werden dann die zweiten Kommunikationsdaten 46 bestimmt. Falls sich dabei während des zweiten Zeitfensters 42 die Zustandsdaten der ersten Übertragungsspule 22 ändern sollten und/oder diese mittels des ersten Hörgeräts 4 erfasst werden sollten, wird dies jeweils nicht weiter berücksichtigt. Da die ersten und zweiten Zeitfensters 34, 42 zueinander disjunkt sind, ist dies problemlos möglich.

Der dritte Arbeitsschritt 40 entspricht somit im Wesentlichen dem zweiten Arbeitsschritt 32, wobei jedoch in dem zweiten Arbeitsschritt 32 die Kommunikation zwischen dem ersten Hörgerät 4 und der ersten Übertragungsspule 22 und in dem dritten Arbeitsschritt 40 zwischen dem zweiten Hörgerät 6 und der zweiten Übertragungsspule 24 erfolgt.

In einem vierten Arbeitsschritt 48 wird in Abhängigkeit der ersten Kommunikationsdaten 38 die Bestromung der ersten Übertragungsspule 22 und in Abhängigkeit der zweite Kommunikationsdaten 44 die Bestromung der zweiten Übertragungsspule 24 angepasst. Die Anpassung erfolgt dabei derart, dass die zu dem jeweiligen Hörgerät 4, 6 übertragende Energiemenge ein optimales Laden der jeweiligen Batterie 8 geführt, wobei eine Überbelastung vermieden ist. Im Anschluss hieran wird die veränderte Bestromung in dem ersten Arbeitsschritt 30 zur Bestromung der Übertragungsspulen 22, 24 verwendet. Der erste und vierte Arbeitsschritt 30,48 werden dabei zumindest teilweise zeitlich parallel zu dem zweiten und dritter Arbeitsschritt 32, 40 durchgeführt, sodass die beiden Übertragungsspulen 22, 24 im Wesentlichen kontinuierlich bestromt werden, wobei die Zeit auf die ersten und zweiten Zeitfenster 34, 42 aufgeteilt sind.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Hörgerätesystem
- 4: erstes Hörgerät
- 6: zweites Hörgerät
- 8: Batterie
- 10: Ladeeinheit
- 12: Ladeelektronik
- 14: Empfangsspule
- 16: Induktives Ladegerät
- 18: erste Ladeschale
- 20: zweite Ladeschale
- 22: erste Übertragungsspule
- 24: zweite Übertragungsspule
- 26: Steuergerät
- 28: Verfahren
- 30: erster Arbeitsschritt
- 32: zweiter Arbeitsschritt
- 34: erstes Zeitfenster
- 36: erste Daten
- 38: erste Kommunikationsdaten
- 40: dritter Arbeitsschritt
- 42: zweites Zeitfenster
- 44: zweite Daten
- 46: zweite Kommunikationsdaten
- 48: vierter Arbeitsschritt

## Patentansprüche

1. Verfahren (28) zum Betrieb eines induktiven Ladegeräts (16) zum Laden eines ersten und eines zweiten Hörgeräts (4, 6), mit einer ersten Übertragungsspule (22) und mit einer zweiten Übertragungsspule (24), bei welchem
- beide Übertragungsspulen (22, 24) bestromt werden,
- während lediglich erster Zeitfenster (36) anhand von Zustandsdaten der ersten Übertragungsspule (22) erste Kommunikationsdaten (38) von dem ersten Hörgerät (4) bestimmt werden,
- während lediglich zweiter Zeitfenster (42) anhand von Zustandsdaten der zweiten Übertragungsspule (24) zweite Kommunikationsdaten (46) von dem zweiten Hörgerät (6) bestimmt werden, wobei
die ersten und zweiten Zeitfenster (34, 42) zueinander disjunkt sind.

2. Verfahren (28) nach Anspruch 1,
**dadurch gekennzeichnet,**
**dass** während der ersten Zeitfenster (34) die Bestromung der ersten Übertragungsspule (22) zur Übertragung von ersten Daten (36) angepasst wird, und dass während der zweiten Zeitfenster (42) die Bestromung der zweiten Übertragungsspule (24) zur Übertragung von zweiten Daten (44) angepasst wird.

3. Verfahren (28) nach Anspruch 1 oder 2,
**dadurch gekennzeichnet,**
**dass** in Abhängigkeit der ersten Kommunikationsdaten (38) die Bestromung der ersten Übertragungsspule (22) und in Abhängigkeit der zweiten Kommunikationsdaten (46) die Bestromung der zweiten Übertragungsspule (24) angepasst wird.

4. Induktives Ladegerät (16) zum Laden eines ersten und eines zweiten Hörgeräts (4, 6), welches eine erste Übertragungsspule (22) und eine zweiten Übertragungsspule (24) aufweist, und welches gemäß einem Verfahren (28) nach einem der Ansprüche 1 bis 3 betrieben ist.

5. Induktives Ladegerät (16) nach Anspruch 4,
**gekennzeichnet durch**
eine erste Ladeschale (18) für das erste Hörgerät (4) und eine zweite Ladeschale (20) für das zweite Hörgerät (6).

6. Induktives Ladegerät (16) nach Anspruch 4 oder 5,
**dadurch gekennzeichnet,**
**dass** die erste Übertragungsspule (22) direkt benachbart zu der zweiten Übertragungsspule (24) angeordnet ist.

7. Hörgerätesystem (2) mit einem ersten Hörgerät (4), mit einem zweiten Hörgerät (6) und mit einem induktiven Ladegerät (16) nach einem der Ansprüche 4 bis 6.
